# EUROPÄISCHE PATENTSCHRIFT

(11) **EP 0 794 032 B1**
(45) Veröffentlichungstag und Bekanntmachung des Hinweises auf die Patenterteilung: **11.09.2002**
(21) Anmeldenummer: 97810086.5
(22) Anmeldetag: 21.02.1997
(51) Int. Cl.: B23K 26/00

(54) **Gegenstand aus miteinander verschweissten Aluminium- und Kupferteilen**
Article fabricated from welded aluminium and copper parts
Article composé de pièces en aluminium et en cuivre assemblées par soudage

(30) Priorität: 07.03.1996 CH 59996
(43) Veröffentlichungstag der Anmeldung: 10.09.1997
(73) Patentinhaber: Alcan Technology & Management AG, 8212 Neuhausen am Rheinfall (CH)
(72) Erfinder: Schwellinger, Pius, 78250 Tengen (DE); Winkler, Reinhard, 78234 Engen (DE); Kampmann, Lutz, 8222 Beringen (CH); Maier, Jörg, 78234 Engen (DE)

(56) Entgegenhaltungen:
- WO-A-89/12205
- US-A- 3 993 238
- US-A- 4 224 499
- US-A- 4 493 940
- US-A- 4 684 781
- PATENT ABSTRACTS OF JAPAN vol. 006, no. 236 (M-173), 25.November 1982 & JP 57 137086 A (SUMITOMO KEIKINZOKU KOGYO KK), 24.August 1982,
- SCHWEISSEN UND SCHNEIDEN, Bd. 23, 1.Januar 1971, Seiten 274-277, XP000605579 BANDOW H: "BEITRAG ZUM VERBINDEN VON ALUMINIUM MIT KUPFER DURCH ELEKTRONENSTRAHLSCHWEISSEN"
- PATENT ABSTRACTS OF JAPAN vol. 008, no. 262 (M-341), 30.November 1984 & JP 59 133921 A (NIHON ARUMINIUMU KOGYO KK), 1.August 1984,
- PATENT ABSTRACTS OF JAPAN vol. 007, no. 211 (M-243), 17.September 1983 & JP 58 107287 A (TOKYO SHIBAURA DENKI KK), 25.Juni 1983,

## Beschreibung

Die Erfindung betrifft ein Verfahren nach dem Oberbegriff von Anspruch 1.

Zum stoffschlüssigen Verbinden von Aluminium mit Kupfer kann das Elektronenstrahlschweissen eingesetzt werden, siehe z.B. H. Bandow, Schweissen und Schneiden 23 (1971), 274. Da dieses Verfahren im Vakuum arbeitet, sind vor allem Strukturen mit grossen Dimensionen nicht bzw. nur mit hohen Kosten herstellbar. Weiter ist aus JP-A-74099941 bekannt, dass mit einer Ag- bzw. Ag-Cu-Legierung als Einlage zwischen Al und Cu gearbeitet werden kann. Auch durch Reibschweissen ist eine Verbindung zwischen Al und Cu möglich. Dabei entsteht jedoch eine breite Spur, auf der beispielsweise eine aufgebrachte Absorptionsschicht zerstört wird.

Aus der US-A- 4 224 499 ist es bekannt, elektrische Leitdrähte aus Kupfer und Aluminium mittels eines pulsierenden Laserstrahls miteinander zu verschweissen. Hierbei werden die beiden Drähte unter Anwendung eines Kontaktdruckes stimseitig stumpf aneinander gepresst. Ein auf die Grenzfläche Aluminium/Kupfer gerichteter pulsierender Laserstrahl bewirkt ein lokales Aufschmelzen und Verbinden der beiden Werkstoffe. Das in der Grenzfläche geschmolzene Metall wird durch den Kontaktdruck an die Oberfläche gepresst.

Die US-A- 4 684 781 offenbart ein Verfahren zur flächigen Beschichtung der Oberfläche eines metallischen Gegenstandes mit einer zweiten Metallschicht. Konkret angeführte Beispiele umfassen auch die Beschichtung der Oberfläche eines Gegenstandes aus Kupfer mit einer Aluminiumfolie. Die durch jeden Puls der Laserstrahlung in die Werkstoffkombination eingebrachte Energie wird zur Erzielung einer guten Haftung zwischen Beschichtung und Substrat so eingestellt, dass sowohl das Kupfer als auch das Aluminium im Grenzflächenbereich Folie/Substrat aufschmilzt, wodurch die beiden Werkstoffe in ihrem Grenzflächenbereich miteinander verschweisst werden.

Aus JP-A- 59 13 39 21 ist es zur Herstellung von Wärmeaustauschern bekannt, die wasserführenden Kupferrohre mit den die Wärmeaustauscheroberfläche bildenden Aluminiumfolien durch Pressschweissen zu verbinden.

Angesichts dieser Gegebenheiten haben sich die Erfinder die Aufgabe gestellt, ein Verfahren der eingangs erwähnten Art zu schaffen, mit welchem die genannten Nachteile des Standes der Technik vermieden werden können.

Zur erfindungsgemässen Lösung der Aufgabe führt ein Verfahren mit den Merkmalen von Anspruch 1.

Unter dem Begriff Aluminiumwerkstoffe bzw. Kupferwerkstoffe werden sowohl reines Aluminium und reines Kupfer als auch deren Legierungen verstanden.

Mit der erfindungsgemäss angewandten Verbindungstechnik wird es möglich, auch beschichtete Teile miteinander zu verbinden, ohne dass die Beschichtung während des Verschweissens ausserhalb des unmittelbaren Schweissnahtbereichs beschädigt wird. Die Beschichtung auf dem Aluminiumwerkstoff kann beispielsweise aus einer Wärmeabsorptionsschicht bestehen.

Insbesondere bei der Verbindung dünner Bleche oder Folien aus Aluminium mit Kupfer kann es sich als zweckmässig erweisen, die Schweissung mit einem Zusatzwerkstoff durchzuführen.

Ein bevorzugter Verwendungsbereich der erfindungsgemässen Gegenstände betrifft die Herstellung von Sonnenkollektoren und Wärmeaustauschern. Bei Anwendungen in ungeschützter Atmosphäre kann zur Verhinderung von Lokalelementen zwischen Aluminium- und Kupferteilen ein spezieller Korrosionsschutz aufgebracht werden.

Weitere Vorteile, Merkmale und Einzelheiten der Erfindung ergeben sich aus der nachfolgenden Beschreibung eines Ausführungsbeispiels.

### Beispiel

Eine 0,3 mm dicke Aluminiumfolie der Reinheit Al 99,8 wurde mit der Glanzseite nach oben auf einem 1 mm dicken Rechteckrohr aus Kupfer fixiert und mit einem Nd-YAG-Laser durchgeschweisst. Es wurde mit gepulstem Strahl und zunächst ohne Zusatzwerkstoff gearbeitet. Die Schweissparameter wurden empirisch so ermittelt, dass auch das Cu aufgeschmolzen wurde. Wurde nur eine Al-Folie auf dem Cu-Rohr fixiert, so wölbte sich das flüssige Al perlschnurartig auf, so dass an den Rändern der Schweissraupe eine starke Einbrandkerbe entstand. Dies tritt beim Verschweissen eines dünnen Teils mit einem sehr viel massiveren Teil in der Regel auf. Trotzdem konnte eine Verbindung der beiden Werkstoffe nachgewiesen werden. Wurden zwei Al-Folien aufeinandergelegt, so konnte die untere Folien mit guter Haftung verschweisst werden. In einer weiteren Versuchsreihe wurde mit SG-AlSi5-Zusatzwerkstoff in der Form eines Drahtes mit 1 mm Durchmesser geschweisst. Unter der Voraussetzung, dass die Al-Folie dicht auf dem Cu-Rohr aufliegt, ist eine gute Schweissung möglich.

Da der ganze Konzentrationsbereich von 0 bis 100% Cu überstrichen wird, könnten theoretisch alle intermetallischen Phasen im System Al-Cu auftreten. Die Erstarrung beim Laserstrahlschweissen erfolgt jedoch sehr rasch. Deshalb ist zu erwarten, dass Phasen mit komplizierter Kristallstruktur (besonders spröde Phasen) bzw. grosser Erstarrungsenthalpie aufgrund von Keimbildungsschwierigkeiten nicht gebildet werden. Statt dessen könnten metallstabile Phasen bzw. die einfacheren Phasen mit starker Uebersättigung der Partnerelemente auftreten. Ein weiterer Vorzug der raschen Erstarrung ist die feine Ausbildung des Gefüges. Dadurch werden Spannungen, die aufgrund von Inkompatibilitäten des Gitters, der Wärmeausdehnung usw. entstehen, von vornherein wesentlich kleiner gehalten.

Mit Hilfe einer Mikrosonde wurde das Gefüge einer Schweissverbindung untersucht und an verschiedenen Punkten die chemische Zusammensetzung analysiert. Die Untersuchungsergebnisse lassen folgende Erklärung einiger Abläufe bei der Erstarrung zu: An der Al-Folie bilden sich Al-Dendriten. Am Cu bildet sich die θ-Phase (Al₂Cu), die ebenfalls zunächst dendritisch erstarrt. Ist die Erstarrung entsprechend weit fortgeschritten, bildet sich ein Eutektikum aus Al-Mischkristall und θ-Phase. Damit ist auch bestätigt, dass die besonders spröden Phasen mit grosser Elementarzelle durch die rasche Erstarrung beim Laserstrahlschweissen unterdrückt werden.

Bei der Verwendung des SG-AlSi5-Zusatzwerkstoffs ändert sich der Gefügeaufbau erheblich. In grossen Bereichen des Schweissgutes tritt ein feines Gemenge der intermetallischen Phasen auf. Die feine Verteilung der Phasen und ihre abgerundete Form wirken sich günstig auf die mechanischen Eigenschaften der Verbindung aus.

## Patentansprüche

1. Verfahren zur Herstellung eines Gegenstandes mit Rohren aus einem Kupferwerkstoff und mit diesen verschweissten Blechen oder Folien aus einem Aluminiumwerkstoff,
**dadurch gekennzeichnet, dass**
die Rohre mit den Blechen oder Folien durch eine Laserstrahlschweissung verbunden werden.

2. Verfahren nach Anspruch 1, **dadurch gekennzeichnet, dass** die Schweissung mit einem Zusatzwerkstoff durchgeführt wird.

3. Verfahren nach Anspruch 2, **dadurch gekennzeichnet, dass** mit einem Zusatzwerkstoff auf der Basis AlSi geschweisst wird.

4. Verfahren nach einem der Ansprüche 1 bis 3 zur Herstellung von Sonnenkollektoren und Wärmeaustauschern.

## Claims

1. Process for the production of an article from pipes made of a copper material and sheets or foils made of an aluminium material welded thereto, **characterised in that** the pipes are joined to the sheets or foils by laser-beam welding.

2. Process according to claim 1, **characterised in that** the welding is carried out with a filler.

3. Process according to claim 2, **characterised in that** the welding is carried out with a filler based on AlSi.

4. Process according to one of claims 1 to 3 for the production of solar collectors and heat exchangers.

## Revendications

1. Procédé pour fabriquer un article avec des tubes formés d'un matériau à base de cuivre et avec des tôles ou des feuilles soudées à ces tube et réalisées en un matériau à base d'aluminium, **caractérisé en ce qu'**on relie les tubes aux tôles ou aux feuilles au moyen d'un soudage utilisant un faisceau laser.

2. Procédé selon la revendication 1, **caractérisé en ce que** le soudage est exécuté avec un métal d'apport.

3. Procédé selon la revendication 2, **caractérisé en ce que** le soudage est effectué avec un métal d'apport à base de AlSi.

4. Procédé selon l'une des revendications 1 à 3 pour fabriquer des collecteurs solaires et des échangeurs de chaleur.
